# EUROPEAN PATENT APPLICATION

(11) **EP 4 498 714 A1**
(43) Date of publication of application: **29.01.2025**
(21) Application number: 22932645.9
(22) Date of filing: 23.03.2022
(51) Int. Cl.: H04W 4/50

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LIU, Jianning, Beijing 100085 (CN)
(74) Representative: Dehns Germany Partnerschaft mbB
(86) International application number: PCT/CN2022/082616
(87) International publication number: WO 2023/178578

(57) **Abstract**

Provided in the embodiments of the present disclosure are an information processing method and apparatus, a communication device, and a storage medium. The information processing method, which is executed by a sensing function network entity, may comprise: determining a candidate executor of a sensing service, wherein the candidate executor comprises an expected executor of the sensing service and/or an alternative executor discovered by a network; and determining a target executor of the sensing service according to the candidate executor.

## Description

### TECHNICAL FIELD

The present disclosure relates to the field of wireless communication technology but is not limited to the field of wireless communication technology, and particularly relates to information processing method and apparatus, a communication device and a storage medium.

### BACKGROUND

Wireless sensing technology aims at acquiring information about a remote object by transmitting a sensing signal without physical contact. After the perception data (or sensing data) of the target or the sensing data of the surrounding of the target is analyzed, the characteristics of the target and/or the characteristics of the environment in which the target is located can be obtained.

Radar is widely used in wireless sensing technology, which uses radar signals to determine the distance, angle, instantaneous speed, etc. of the target.

There are other sensing technologies including non-radio frequency (RF) sensors, which may include: time of flight (ToF) cameras, accelerometers, gyroscopes, lidar, etc.

Integrated sensing and communication systems means that the fifth generation of mobile communications (5G) new radio (New radio, NR) is provided with sensing capabilities, so that the communication system and infrastructure of 5G NR are used for communication as well as sensing services.

### SUMMARY

The embodiments of the present disclosure provide information processing method and device, communication device and storage medium.

According to a first aspect of the embodiments of the present disclosure, there is provided an information processing method, performed by a sensing function network entity, including: determining candidate executors of a sensing service, where the candidate executors include an expected executor of the sensing service and/or an alternative executor discovered by a network; and determining a target executor of the sensing service according to the candidate executors.

According to a second aspect of the embodiments of the present disclosure, there is provided an information processing method, performed by an initiator of a sensing service, including:
sending a sensing service request to a sensing function network entity, where the sensing service request indicates an expected executor for providing the sensing service.

According to a third aspect of the embodiments of the present disclosure, there is provided an information processing method, performed by an available executor that is capable of providing a sensing service, including:
receiving a fourth request sent by a sensing function network entity; where the available executor is: an expected executor indicated by the sensing function network entity according to a sensing service request; or an available executor determined by the sensing function network entity and located in a target area of the sensing service;
determining whether it is willing to be a target executor of the sensing service according to the fourth request; and
sending a fourth response to the sensing function network entity according to whether the available executor is willing to be the target executor.

According to a fourth aspect of the embodiments of the present disclosure, there is provided an information processing device, including:
a first determining module, configured to determine candidate executors of a sensing service, where the candidate executors include an expected executor of the sensing service and/or an alternative executor discovered by a network; and
a second determining module, configured to determine a target executor of the sensing service according to the candidate executors.

According to a fifth aspect of the embodiments of the present disclosure, there is provided an information processing device, including:
a third sending module configured to send a sensing service request to a sensing function network entity, where the sensing service request indicates an expected executor for providing the sensing service.

According to sixth aspect of the embodiments of the present disclosure, there is provided an information processing device, including:
a second receiving module configured to receive a fourth request sent by a sensing function network entity; where the available executor is: an expected executor indicated by the sensing function network entity according to the sensing service request; or an available executor determined by the sensing function network entity and located in a target area of the sensing service;
a third determining module configured to determine whether it is willing to be a target executor of the sensing service according to the fourth request; and
a fourth sending module configured to send a fourth response to the sensing function network entity according to whether the available executor is willing to be the target executor.

According to a ninth aspect of the embodiments of the present disclosure, there is provided a communication device, including a processor, a transceiver, a memory, and an executable program stored on the memory and capable of being run by the processor, where the processor executes the method according to any one of the above first aspect to the third aspect upon running the executable program.

According to a tenth aspect of the embodiments of the present disclosure, there is provided a computer storage medium, where the computer storage medium stores an executable program; after the executable program is executed by the processor, the method according to any one of the above first aspect to the third aspect can be implemented.

Embodiments of the present disclosure provide technical solutions in which candidate executors determined by the SF network entity may include: an expected executor specified by an initiator of the sensing service and/or an expected executor specified by a consumer of the sensing service.

It should be understood that the above general description and the later detailed description are exemplary and explanatory only and do not limit the embodiments of the present disclosure.

### BRIEF DESCRIPTION OF THE DRAWINGS

The drawings herein are incorporated into and constitute a part of the specification, showing embodiments consistent with the present disclosure, and together with the specification, are used to explain the principles of the embodiments of the present disclosure.
FIG. 1 is a schematic diagram of the structure of a wireless communication system according to an embodiment;
FIG. 2 is a schematic diagram of a sensing system according to an embodiment;
FIG. 3 is a schematic diagram of a sensing system according to an embodiment;
FIG. 4 is a schematic diagram of a sensing system according to an embodiment;
FIG. 5 is a schematic diagram of a sensing mode according to an embodiment;
FIG. 6 is a flow chart of an information processing method according to an embodiment;
FIG. 7 is a flow chart of an information processing method according to an embodiment;
FIG. 8 is a flow chart of an information processing method according to an embodiment;
FIG. 9 is a flow chart of an information processing method according to an embodiment;
FIG. 10 is a flow chart of an information processing method according to an embodiment;
FIG. 11 is a flow chart of an information processing method according to an embodiment;
FIG. 12 is a flow chart of an information processing method according to an embodiment;
FIG. 13 is a flow chart of an information processing method according to an embodiment;
FIG. 14 is a structural diagram of an information processing device according to an embodiment;
FIG. 15 is a structural diagram of an information processing device according to an embodiment;
FIG. 16 is a structural diagram of an information processing device according to an embodiment;
FIG. 17 is a structural diagram of a UE according to an embodiment;
FIG. 18 is a structural diagram of a communication device according to an embodiment.

### DETAILED DESCRIPTION

Here, embodiments will be described in detail, and examples thereof are shown in the accompanying drawings. When the following description refers to the drawings, unless otherwise indicated, the same numbers in different drawings represent the same or similar elements. The embodiments described in the following embodiments do not represent all embodiments consistent with the embodiments of the present disclosure. Instead, they are only examples of devices and methods consistent with some aspects of the embodiments of the present disclosure.

The terms used in the embodiments of the present disclosure are only for the purpose of describing specific embodiments and are not intended to limit the embodiments of the present disclosure. The singular forms "one", "a", "an" and "the" used in the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these pieces of information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "upon..." or "when..." or "in response to determining".

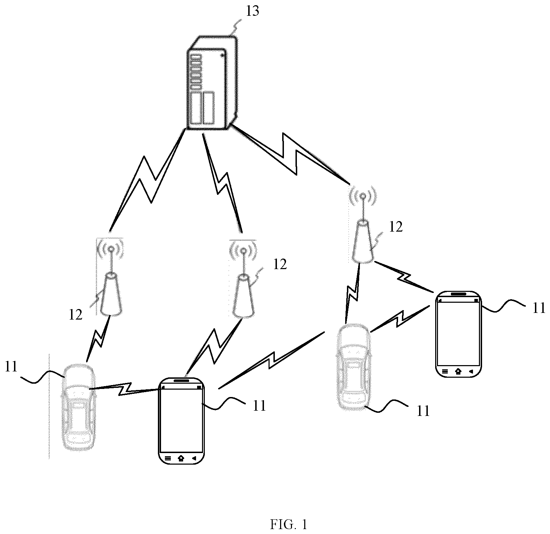

Please refer to FIG. 1, which shows a schematic diagram of a structure of a wireless communication system provided by an embodiment of the present disclosure. As shown in FIG. 1, the wireless communication system is a communication system based on cellular mobile communication technology, and the wireless communication system may include several UEs 11 and several access devices 12.

The UE 11 can be a device that provides voice and/or data connectivity to users. The UE 11 can communicate with one or more core networks via a radio access network (RAN). The UE 11 can be an Internet of Things UE, such as a sensor device, a mobile phone (or called "cellular" phone), and a computer with an Internet of Things UE. For example, it may be a fixed, portable, pocket-sized, handheld, computer-built-in or vehicle-mounted device, such as station (STA), subscriber unit, subscriber station, mobile station, mobile, remote station, access point, remote terminal, access terminal, user terminal, user agent, user device, or user equipment (UE). Alternatively, the UE 11 may also be a device of an unmanned aerial vehicle. Alternatively, the UE 11 may also be a vehicle-mounted device, for example, a trip computer with a wireless communication function, or a wireless communication device connected externally to the trip computer. Alternatively, the UE 11 may also be a roadside device, for example, a street lamp, a signal lamp or other roadside device with a wireless communication function.

The access device 12 may be a network-side device in a wireless communication system. The wireless communication system may be a 4th generation mobile communication (4G) system, also known as a long term evolution (LTE) system; or the wireless communication system may be a 5G system, also known as a new radio (NR) system or a 5G NR system. Alternatively, the wireless communication system may be a next generation system of the 5G system. The access network in the 5G system may be called NG-RAN (New Generation-Radio Access Network). Alternatively, an MTC system.

The access device 12 may be an evolved access device (eNB) used in a 4G system. Alternatively, the access device 12 may also be an access device (gNB) using a centralized distributed architecture in a 5G system. When the access device 12 uses a centralized distributed architecture, it generally includes a central unit (CU) and at least two distributed units (DU). The central unit is provided with a protocol stack of a packet data convergence protocol (PDCP) layer, a radio link control (RLC) layer, and a media access control (MAC) layer. The distributed unit is provided with a physical (PHY) layer protocol stack. The specific implementation method of the access device 12 is not limited in the embodiment of the present disclosure.

A wireless connection can be established between the access device 12 and the UE 11 through a wireless air interface. In different implementations, the wireless air interface is a wireless air interface based on the fourth generation mobile communication network technology (4G) standard; or the wireless air interface is a wireless air interface based on the fifth generation mobile communication network technology (5G) standard, for example, the wireless air interface is a new radio; or the wireless air interface can also be a wireless air interface based on the next generation mobile communication network technology standard of 5G.

The sensing service provided by the integrated sensing and communication system may involve: communication assisted sensing. The communication assisted sensing may include: sensing involving a communication channel or a communication environment, and communication instructions for improving communication services. For example, the sensing information of sensing services is configured to assist radio resource management, interference mitigation, beam management, UE mobility management, etc.

In vertical fields, 5G-based sensing services can be used for intelligent transportation, aviation, enterprise, smart city, smart home, factories, consumer applications, Extended Reality (XR), or public sector.

There are many types of sensing services, and the following are a few examples:
Vehicle to X (V2X) wireless communication technology, infrastructure-assisted environment sensing, infrastructure-based tele-operated driving, high-definition map collecting and sharing and tele-operated driving support, environment real-time monitoring, autonomous driving, drones, air pollution monitoring, indoor health care, and intrusion detection.

Sensing of wireless communication channels and environment can further improve the performance of communication systems. Some examples of sensing-assisted communication are as follows:
Sensing UE's location and channel environment to narrow the beam sweeping range and shorten the beam training time.
Sensing UE's location, velocity, motion trajectory, and channel environment for beam prediction, and reducing the overhead of beam measurement and the delay of beam tracking.
Sensing UE's property and channel environment to improve the performance of channel estimation.

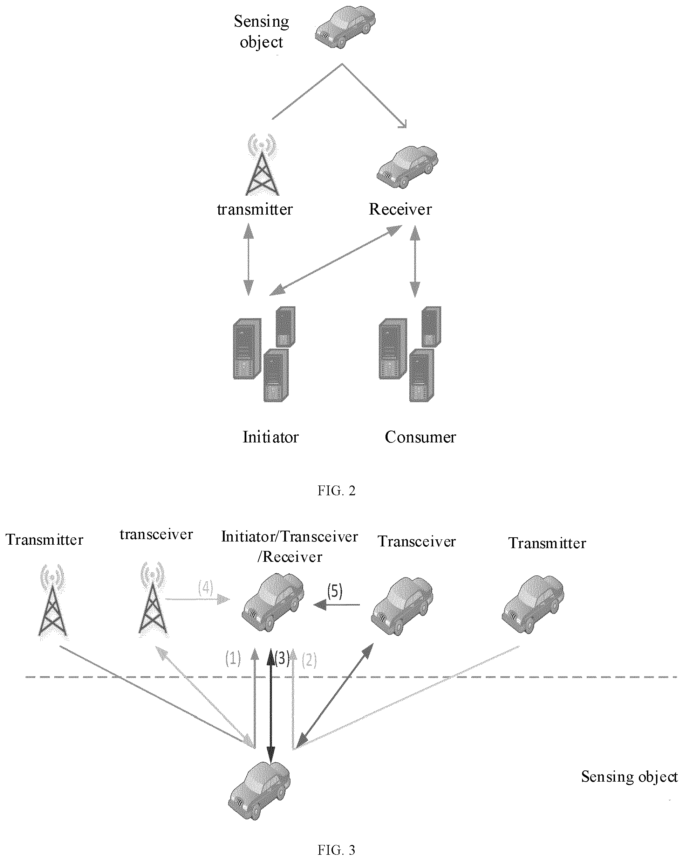

As shown in FIG. 2, there are different roles in the sensing system, which may include:
Reflective object: sensing the target to obtain its information;
Transmitter: a device that sends a radio signal to the target. The transmitter can be a UE or a gNB.
Receiver: a device that detects the radio signal reflected by the target to obtain sensing information. Similarly, the receiver can be a UE or a gNB.
Initiator: a device that is authorized to initiate sensing services. For example, the initiator can request from or subscribe to one or more receivers for the sensing information. Similarly, the initiator can be a UE or a gNB, or a network function (NF). The initiator is usually a device that collects the sensing information and processes it to generate the sensing result.
Consumer: a device that consumes (i.e., uses) the sensing result. The consumer can be an UE application or a sensing application server.

It is worth noting that the transmitter, receiver, initiator and consumer may be pairwise or all collocated together

Sensing information can be derived at UE or network side. The sensing information is derived based on the sensing data provided by multiple sensing sources in different sensing modes.

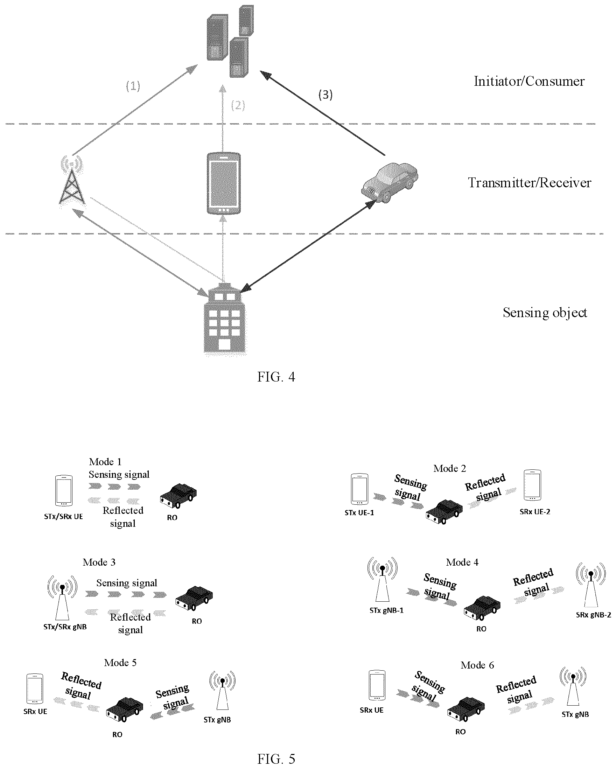

FIG. 3 and FIG. 4 are schematic diagrams of aggregating and processing sensing data to obtain sensing information.

As shown in FIG. 3, the base station and the vehicle-mounted UE can be configured as transmitters at the same time; and the base station and the vehicle-mounted UE can be configured as receivers to sense the same target at the same time. The vehicle-mounted UE can be configured as both an initiator and a receiver. A base station and a UE can both be configured as a transmitter and a receiver at the same time. That is, as a transceiver, they transmit the sensing signal and receive the transmission signal formed by the reflection of the sensing signal acting on the target.

FIG. 4 shows a hierarchical mode of a sensing system, which may include: initiator, consumer, transmitter, receiver and sensing target.

FIG. 5 shows an example of a sensing mode.
Mode 1: One UE acts as a transmitter and a receiver at the same time;
Mode 2: One UE acts as a transmitter and another UE acts as a receiver;
Mode 3: One base station acts as a transmitter and a receiver at the same time;
Mode 4: One base station acts as a transmitter and another base station acts as a receiver;
Mode 5: The base station acts as a transmitter and the UE acts as a receiver;
Mode 6: The UE acts as a transmitter and the base station acts as a receiver.

In FIG. 5, STx represents the transmitter and SRx represents the receiver.

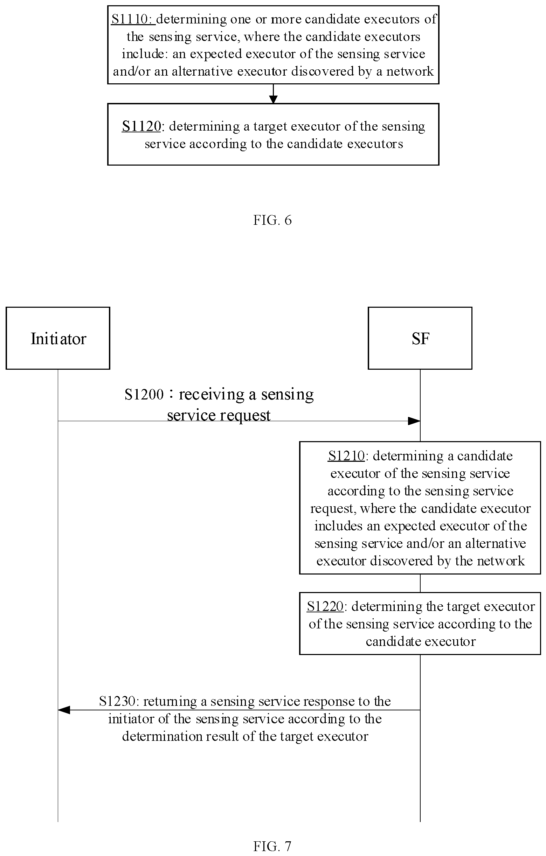

As shown in FIG. 6, the embodiment of the present disclosure provides an information processing method, which is executed by a sensing function network entity, and the method includes:
S1110: determining one or more candidate executors of the sensing service, where the candidate executors include: an expected executor of the sensing service and/or an alternative executor discovered by a network;
S1120: determining a target executor of the sensing service according to the candidate executors.

The executing entity of the information processing method is the sensing function network entity, which can be abbreviated as the sensing function (SF).

The sensing function network entity can serve as a core network function network entity.

In one embodiment, the SF can be configured for both the control plane (CP) and the user plane (UP).

In one embodiment, the sensing function network entity may include: a sensing function control plane network entity and/or a sensing function user plane network entity. The sensing function control plane network entity can be configured for signaling interaction between CP and sensing service, and the sensing function user plane network entity can be configured for data interaction of UP.

In the embodiment of the present disclosure, when it is necessary to provide a sensing service, the SF may first determine the candidate executors of the sensing service, and then select the target executor that is currently suitable for executing the sensing service from the candidate executors.

In the embodiment of the present disclosure, the candidate executors may include: the expected executor specified by the initiator of the sensing service and/or the expected executor specified by the consumer of the sensing service.

For example, in an application scenario, the initiator and/or consumer of the sensing service knows which executors can provide the sensing service, and can specify the expected executor considering their own confidence and/or accuracy requirements for the execution results of the sensing service.

According to the role played by the expected executor in the sensing service, the expected executor includes but is not limited to at least one of the following: the expected transmitter; and/or the expected receiver.

In some embodiments, the expected executor may also include: an executing entity that performs relevant calculations based on the sensing data to obtain the sensing result, and the executing entity is the calculator (or it is called processor).

According to the device type of the expected executor itself, the expected executor may include but is not limited to at least one of the following: the expected base station and/or the expected UE.

Similarly, according to the role played by the alternative executor in the sensing service, the alternative executor may be: a candidate that can be used as an executor of the sensing service by the first network element based on the discovery function. Similarly, the alternative executor may include but is not limited to: an alternative transmitter and/or an alternative receiver.

In some other embodiments, the alternative executor may also include: an alternative calculator and/or an alternative processor.

According to the device type of the alternative executor itself, the alternative executor may also include: an alternative base station and/or an alternative UE.

In the embodiment of the present disclosure, the candidate executor, as a candidate for providing the sensing service, will be further selected by the first network element to obtain the target executor that finally provides the sensing service.

The target executor determined by the first network element in this way takes into account the expectations of the sensing service of the initiator and/or consumer of the sensing service, and at the same time takes into account the feasibility of the sensing service and makes full use of the discovery function of the network, thereby improving the service quality of the sensing service.

In some embodiments, determining the candidate executors includes:
determining the expected executor;
when the expected executor is not determined, discovering the alternative executor.

This embodiment provides a method for determining the candidate executor, which is to first determine whether there is an expected executor. If it is determined that there is an expected executor, the expected executor serves as the candidate executor. If the expected executor is not determined, the network discovery function can be performed to discover the alternative executor. In this way, the candidate executor is the expected executor or the alternative executor.

In another embodiment, determining the candidate executors may include: determining the expected executor and determining the alternative executor based on the network discovery function. At this time, the candidate executors may include: the expected executor and the alternative executor.

In one embodiment, if the candidate executors includes both the expected executor and the alternative executor, the expected executor may have a higher priority than the alternative executor. At this time, if both the expected executor and the alternative executor can provide sensing services, the expected executor is selected to provide sensing services according to the priority. If no expected executor can provide sensing services, the alternative executor can be selected as the target executor to provide sensing services.

In one embodiment, discovering the alternative executor may include but is not limited to at least one of the following:
based on the target area of the sensing service, determining the base station and/or UE located in the target area as the alternative executor;
based on the QoS of the sensing service, determining the base station and/or UE located in the target area that can provide the QoS as the alternative executor; and
based on the service type of the sensing service, determining the base station and/or UE that can provide the sensing service of the corresponding service type as the alternative executor.

The above are only several optional ways to discover the alternative executor, and the specific implementation is not limited to the above examples.

For example, the UE may be various types of terminals, such as a vehicle-mounted terminal, a mobile phone, a tablet computer or a wearable device carried by a user

In some embodiments, determining the expected executor includes:
determining the expected executor according to the sensing service request.

The SF receives the sensing service request. In some embodiments, the sensing service request may carry information of the expected executor of the sensing service, and the information of the expected executor includes but is not limited to at least one of the following:
identification information of the expected executor; and
type information of the expected executor.

The embodiment of the present disclosure provides a method for determining the expected executor according to the sensing service request. In another embodiment, if the initiator of the sensing service request is a UE, etc., the type information of the expected executor subscribed by the UE can be determined according to the subscription data of the UE, so that the expected executor can also be determined.

In short, there are many ways to determine the expected executor, and the specific implementation is not limited to any of the above.

As shown in FIG. 7, the embodiment of the present disclosure provides an information processing method, which is executed by a sensing function network entity, and the method includes:
S1200: receiving a sensing service request;
S1210: determining a candidate executor of the sensing service according to the sensing service request, where the candidate executor includes an expected executor of the sensing service and/or an alternative executor discovered by the network;
S 1220: determining the target executor of the sensing service according to the candidate executor;
S1230: returning a sensing service response to the initiator of the sensing service according to the determination result of the target executor.

In one embodiment, the SF receives a sensing service request from the initiator. After receiving the sensing service request, the candidate executor of the sensing service will be determined. At this time, the expected executor can be determined according to the information of the expected executor carried in the sensing service request, or the alternative executor can be determined according to the relevant information of the sensing service.

After determining the target executor, the sensing service response is returned to the initiator according to the determination result of the target executor.

In the embodiment of the present disclosure, the first network element will respond to the sensing service request by returning the sensing service response to the initiator

In some embodiments, the S1230 may include:
when it is determined that there is a target executor providing the sensing service, returning a sensing service acceptance response to the initiator;
when it is determined that there is no target executor providing the sensing service, returning a sensing service rejection response to the initiator

In short, the sensing service response can be configured to inform the initiator of the sensing service of at least one of the following information:
whether the network will provide the sensing service;
whether the network allows the expected executor to provide the sensing service;
whether there is an expected executor that can provide the sensing service; and
the target executor of the sensing service finally selected by the network.

After receiving the sensing service response, the initiator of the sensing service can know whether it needs to re-initiate the sensing service request in order to be provided with the sensing service; or which executors provide the sensing service.

In some embodiments, if the sensing service response is a sensing service rejection response, the sensing service rejection response may also carry a rejection reason, so that after receiving the sensing service rejection response, the initiator determines the reason why the sensing service request is rejected and improves the service quality.

In other embodiments, after determining the target executor, the first network element notifies the target executor to provide the sensing service. That is, there is no need to respond to the sensing service.

In some embodiments, when at least some of the expected executors are unable to provide the sensing service or are unwilling to perform the sensing service, the sensing service response indicates whether the initiator accepts the alternative executors discovered by the network device to provide the sensing service.

If the expected executors indicated by the initiator or the consumer cannot provide the sensing service, the initiator can be informed through the sensing service response, which is equivalent to prompting the initiator whether it needs to accept that other candidate executor discovered by the network provides the sensing service.

For example, when a class of executors (e.g., transmitters or receivers) among the expected executors indicated by the sensing service request cannot provide the sensing service or are unwilling to provide the sensing service, it can be considered that determining the target executor of the current sensing service has failed, and a sensing service rejection response is sent to the initiator, and the initiator is instructed whether to accept the alternative executor discovered by the network device to provide the sensing service.

In another embodiment, when at least some of the expected executors cannot provide the sensing service or are unwilling to perform the sensing service, the sensing service response indicates to the initiator of the sensing service request that the expected executor is unavailable.

At least some of the expected executors here may include: all expected executors or part of the expected executors, and the sensing service response can also be configured to inform the initiator of the sensing service that the expected executor is unavailable, so that the initiator decides whether to replace the expected executor and re-initiate the sensing service request, or send a sensing service request without specifying the expected executor.

In some embodiments, discovering the alternative executor includes:
according to the sensing service request, determining the target area for providing the sensing service;
determining the base station and/or user equipment UE located in the target area as the alternative executor.

The sensing service request may include area information, which may be configured to determine the target area of the sensing service.

In one embodiment, the block information may be any information that can indicate the target area, and the area information may include at least one of the following:
tracking area identification, indicating one or more tracking areas (TA) within the target area;
base station identification, indicating one or more base stations located in the target area;
cell identification, indicating one or more cells contained in the target area;
center point location information and sensing radius, the center point location information indicates the location of the center point of the target area, and the location information includes but is not limited to longitude and latitude information; the sensing radius and the center point coordinates may be configured to determine the scope of the target area;
boundary point location information, directly connecting the boundary points corresponding to the boundary point location information to form a closed or approximately closed area, thereby constituting the target area.

Of course, the above are just a few examples of the sensing service request carrying area information, and the specific implementation is not limited to the above examples.

After determining the target area, the base station and/or UE currently located in the target area is determined, so that the base station and/or UE located in the target area can serve as an alternative executor for providing the sensing service.

For example, a query request is sent to AMF. Since AMF is responsible for the mobility management of UE and the management of base stations, etc., the area information is provided to AMF. AMF can provide base stations and/or UEs located in the target area when the sensing service needs to be provided, so that the alternative executor can be determined.

In some embodiments, the sensing service request may not provide location information, but the target area can be determined according to the location of the initiator and/or consumer of the sensing service. For example, the vehicle-mounted device itself serves as the initiator and consumer of the sensing service, its own location and its own device type can be configured to determine the target area where the network needs to provide the sensing service. In this case, the location of the vehicle-mounted device itself can be determined as the center point or one of the boundary points of the target area.

In some embodiments, determining the base station and/or user equipment UE located in the target area as the alternative executor includes:
determining the base station identification of the base station and/or the cell identification of the cell located in the target area;
determining AMF according to the base station identification of the base station and/or the cell identification of the cell in the target area;
sending a first request to the AMF;
receiving a first response returned by the first request; and
determining the alternative executor located in the target area according to the first response.

For example, after determining the target area, SF can map the target area to a base station identification or a cell identification, for example, SF can map the TA identification to a base station identification and/or a cell identification, etc.

Then, according to the association between the base station and/or the cell and the AMF, the AMF that provides the sensing service is determined.

After determining the AMF, information for inquiring which serves as the alternative executor is sent to the AMF, so that at least the original area information, or the cell identification and/or base station identification that is mapped to is carried in the first request.

After receiving the first request, the AMF will receive a first response. The first response may include a base station identification of the alternative base station and/or a UE identification of the alternative UE. For example, the identification of the candidate executor can be carried in the first response in the form of a list.

If the alternative executor is a base station, the AMF can also determine whether the base station can be an available base station that can provide the sensing service based on the configuration information of the base station before returning the base station identification, and directly complete the verification of whether the alternative base station is an available base station and return it to the SF.

If the alternative executor is a UE, the AMF can directly return the UE identification to the SF. Regarding whether the UE can serve as an available executor that can currently provide the sensing service, it needs to be verified again. Therefore, in some embodiments, the first response includes:
the base station identification of the available base station;
   and/or
the UE identification of the alternative UE.

After the SF obtains the UE identification, it can determine whether the UE is an available UE by querying the UE's subscription data.

In one embodiment, determining the target executor of the sensing service according to the candidate executor includes:
determining the sensing mode of the sensing service; and
selecting the target executor from the candidate executors according to the sensing mode.

In the embodiment of the present disclosure, the sensing service provides a sensing mode that needs to be selected in response.

In the embodiment of the present disclosure, before determining the target executor of the sensing service, the sensing mode is determined first. Due to different sensing modes, the executors used may be different.

In the embodiment of the present disclosure, the sensing mode can be any one of the aforementioned modes 1 to 6.

For example, when mode 1 is adopted, the target executors are all UEs; if mode 3 is adopted, the target executors are all base stations. Of course, if any one of mode 2 and modes 4 to 6 is adopted, the target executor involves both the base station and the UE.

After determining the sensing mode, the target executor required by the determined sensing mode is selected from the candidate executors.

In one embodiment, determining the sensing mode of the sensing service includes:
according to one or more of the service type of the sensing service, the expected service quality QoS of the sensing service, the operator pre-configuration information and the type of the expected executor, the sensing mode of the sensing service is determined.

Different service types are provided with sensing services by specific sensing modes, which can ensure the accuracy and service quality of the sensing results.

For example, for the sensing service of air pollution monitoring, mode 3 can be preferably used to provide the sensing service, and the target executor can be the base station at this time.

For another example, for the sensing service of unmanned driving or assisted driving, mode 2, mode 4 to mode 6 can be preferably configured to provide the sensing service, and the target executor includes both the base station and the UE at this time.

In one embodiment, the QoS expected by the sensing service is different, and the required sensing mode may be different. For example, the QoS of the sensing mode of the base station as both transmitter and receiver may be higher than the QoS of a single UE as transmitter and receiver. Therefore, the required sensing mode can be determined according to the QoS of the currently requested sensing service.

In one embodiment, the operator may pre-configure the sensing mode, and the pre-configured sensing mode may be indicated by the operator configuration information. For example, the QoS of the sensing mode of the base station as both transmitter and receiver may be higher than the QoS of a single UE as transmitter and receiver. Therefore, the required sensing mode can be determined according to the sensing mode pre-configured by the operator

In another embodiment, the operator configuration information indicates the sensing mode determination policy, so that the SF can also determine the sensing mode according to the policy indicated by the operator configuration information. For example, the policy indicates different types of initiators correspond to different sensing modes; for example, sensing modes correspond to different consumers and/or network states.

When the network only supports a single sensing mode, the sensing mode supported by the network is determined as the sensing mode for providing sensing services.

For example, when the network only supports a single sensing mode, the information for determining the sensing mode carried by the sensing service request is ignored, and the sensing mode supported by the network is directly determined as the sensing mode for providing sensing services.

For example, the single sensing mode supported by the network can be any one of the aforementioned modes 1 to 6. For example, the single sensing mode supported by the network can include mode 3 or mode 4.

When the sensing mode cannot be determined according to the sensing service request, the default mode indicated by the operator configuration information is configured as the sensing mode for currently providing sensing service.

In some other embodiments, the sensing service request may not directly carry information such as service type, expected QoS and/or mode identification, etc., but indicates information about the expected executor, so the mode that the initiator expects to use can be determined according to the type of the expected executor.

For example, if the expected executors indicated by the sensing service request are all UEs, then mode 1 or 2 can be defaulted as the sensing mode requested by the initiator. For another example, if the expected executors indicated by the sensing service request are all base stations, then mode 3 or 4 can be defaulted as the sensing mode requested by the initiator. Assuming that the sensing service request indicates that the expected executors include some UEs and some base stations, and specifies that the base station is the expected transmitter and the UE is the expected receiver, then mode 5 can be used as the final mode.

The mode identification can be any one of the identification information of the aforementioned modes 1 to 6. If the sensing service request contains the mode identification, the sensing mode can be directly determined according to the mode identification.

In summary, in the embodiment of the present disclosure, SF can determine the sensing mode to be used according to the service type, mode identification, expected QoS and/or information about the expected executor.

The above is only an example of how to determine the sensing mode, and the specific implementation is not limited to the above example.

In one embodiment, determining the target executor of the sensing service according to the candidate executor includes:
determining the available executor from the candidate executors; and
determining whether the available executor is willing to serve as the target executor.

In one embodiment, determining the available executor from the candidate executors includes:
determining the available executor from the candidate executors according to the state information of the candidate executor and/or the sensing mode selected for use.

The available executor may be an executor that can provide the sensing service within the time period of providing the sensing service.

For example, some UEs have limited remaining power. If they continue to provide sensing services to other UEs, their own power will be consumed rapidly, resulting in a significant reduction in the UE standby time. Although such UEs can serve as candidate executors, they are not currently available executors that can provide sensing services.

For another example, some UEs or base stations are identified as alternative executors, but they do not have codes for executing sensing services installed on them. Therefore, such UEs do not have the ability to execute sensing services and are obviously not available executors of sensing services.

In summary, in the embodiment of the present disclosure, before determining the target executor, it is first determined whether each alternative executor is an available executor. If it is an available executor, it could be to be selected as the target executor for providing the sensing service.

In one embodiment, determining the available executor from the candidate executors includes:
when the candidate executors include user equipment UE, sending a second request to the user data management UDM;
receiving a second response returned based on the second request; and
according to the second response, determining whether the UE is the available executor.

If the candidate executor is a UE, UDM is a network element that stores UE related information.

In the embodiment of the present disclosure, SF may be different from UDM, so it can be known whether the corresponding UE can serve as an available executor by sending a second request to UDM and receiving a second response.

The second request may include the identification of the candidate UE. Therefore, after the UDM receives the second request, it can query the subscription data of the UE according to the identification of the UE carried in the second request.

In one embodiment, receiving the second response returned based on the second request includes:
receiving the subscription data of the UE returned based on the second request;
determining whether the UE is the available executor according to the second response includes:
determining whether the UE is the available executor according to the subscription data.

In this embodiment, the UDM directly returns the subscription data to the SF, and the SF determines whether the corresponding UE is an available executor according to the received subscription data.

The subscription data returned from the UDM to the SF includes but is not limited to: all subscription data of the UE and/or subscription data related to the sensing service.

For example, the subscription data includes at least one of the following:
identification of the UE;
sensing authorization information, indicating whether the UE is authorized to be the executor of the sensing service;
user consent information, indicating whether the user of the UE allows to be the executor of the sensing service;
sensing capability information, indicating whether the UE has the ability to perform the sensing service as a transmitter, a receiver, or both a transmitter and a receiver.

The identification of the UE includes but is not limited to: the subscription permanent identifier (SUPI) of the UE.

The sensing authorization information may indicate whether the UE is a trusted UE that performs the sensing service. If the network side authorizes the UE to perform the sensing service, the security of the UE providing the sensing service may be ensured through the interaction of the authorization information during the authorization process.

The user consent information indicates whether the user is willing to use his UE as the executor of the sensing service, or as the transmitter and/or receiver of the sensing service.

In some embodiments, the subscription data may also include: UE capability information, indicating the UE's subscription capability related to the sensing service, etc.

In another embodiment, the second response includes the first indication of whether the UDM is the available executor according to the subscription data of the UE.

In this embodiment, after receiving the second request, the UDM may query its own stored subscription data according to the second request, and determine whether the corresponding UE is an available executor, and then return the second response to the SF according to the determination result of whether the corresponding UE is an available executor. In this way, when the SF receives this second response, it can determine whether the candidate UE can serve as an available executor according to the first indication carried in the second response without having to make a judgment based on the subscription data.

In some embodiments, determining the target executor of the sensing service according to the candidate executor includes:
when the candidate executor includes a candidate base station, sending a third request to the access management function AMF of the candidate base station; the candidate base station at least includes the expected base station as the expected executor, and if the AMF finds the alternative base station in the target area and fails to verify whether the alternative base station can serve as an available base station, the candidate base station may also include an alternative base station;
based on the third response returned by the third request, determining whether the alternative base station is the available executor.

If the candidate executor includes the candidate base station, whether the corresponding candidate base station is an available executor is determined by accessing the AMF.

After determining the sensing mode, if a base station needs to be used as the target executor, a base station is selected from the candidate executors, and the AMF determines whether the candidate base station can serve as an available executor.

When the candidate executors include the candidate base station, a request is sent to the AMF connected to the candidate base station, which is equivalent to the SF accessing the AMF, and whether the candidate base station can serve as an available executor is determined by accessing the AMF.

In one embodiment, when the candidate executors include the expected base station, sending a third request to the access management function AMF of the expected base station includes:
when the candidate executors include the expected base station, determining the AMF according to the identifier of the expected base station or the cell identifier of the expected base station;
sending the third request to the AMF;
based on the third response returned by the third request, determining whether the alternative base station is the available executor includes:
according to the configuration information contained in the third response, determining whether the expected base station is the available executor, wherein the configuration information includes base station authorization information of whether the expected base station is authorized as the executor of the sensing service, and/or capability information of the base station which is the executor of the sensing service.

The first AFM returns the configuration information of the base station, at least the configuration information related to the sensing service of the base station to the SF, so that the SF determines by itself whether the corresponding alternative base station can serve as an available executor by receiving the configuration information.

In another embodiment, determining whether the candidate base station is the available executor according to the configuration information contained in the third response includes:
determining whether the candidate base station is the available executor according to the second indication contained in the third response, wherein the second indication at least includes: the AMF determines whether the candidate base station can serve as the target executor according to the configuration information of the candidate base station. For example, the candidate base station at least includes the expected base station. In some other embodiments, the candidate base station may also include an alternative base station.

That is, after receiving the third request, the AMF determines whether the candidate base station can serve as an available base station for providing sensing services according to the configuration information of each base station stored in the first AFM, and returns the third response indicating whether the corresponding candidate base station can be an available base station to the SF. In this way, the SF directly knows whether the corresponding candidate base station can be an available executor according to the third response without judging by itself according to the configuration information.

In one embodiment, if a candidate executor is identified as an available executor, the available executor can be directly identified as a target executor.

In another embodiment, determining whether the available executor is willing to serve as the target executor includes:
sending a fourth request to the available executor;
receiving a fourth response returned based on the fourth request; and
determining whether the available executor is currently willing to serve as the target executor according to the fourth response.

Sending a fourth request to the available executor and receiving a fourth response implements secondary verification of whether the corresponding available executor is willing to serve as the target executor. On the one hand, it can take into account the willingness and status information of the available executor itself, and on the other hand, it can take into account that if the available executor unwilling to serve as the target executor is forcibly requested to provide the sensing service, the service quality of the sensing service may be negatively affected.

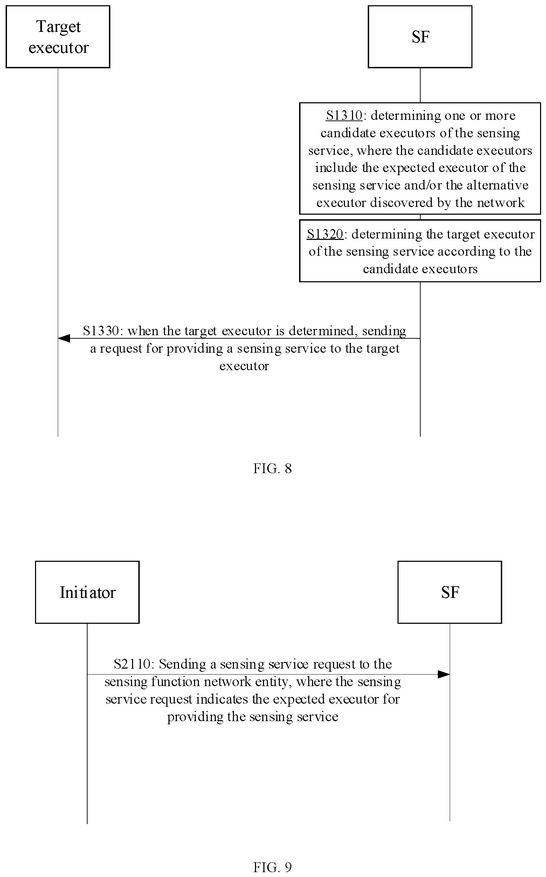

As shown in FIG. 8, the embodiment of the present disclosure provides an information processing method, which is executed by a sensing function network entity, and the method includes:
S1310: determining one or more candidate executors of the sensing service, where the candidate executors include the expected executor of the sensing service and/or the alternative executor discovered by the network;
S 13 20: determining the target executor of the sensing service according to the candidate executors.
S1330: when the target executor is determined, sending a request for providing a sensing service to the target executor.

This embodiment can be implemented alone or in combination with the above embodiment.

In some embodiments, after the SF determines the target executor, it will send a request for providing a sensing service to the target executor, so that after receiving the request, the target executor will perform operations related to the sensing service, thereby providing the sensing service.

In one embodiment, the request includes a sensing parameter for the target executor to provide the sensing service.

For example, the sensing parameter includes but is not limited to at least one of the following:
time information, indicating the time period for providing the sensing service;
operation type information, indicating that the corresponding target executor is a transmitter and/or receiver;
sensing signal parameter, indicating the signal frequency band and/or identification of the sensing signal used for target sensing, etc.;
target information, indicating the sensing target and/or one or more attributes of the sensing target. The attributes include but are not limited to: the general shape, volume and/or speed range of the target when moving, etc.

The above parameters can be used for the target executor to provide the sensing service. In the specific implementation process, the request sent to the target executor includes but is not limited to the above parameters.

As shown in FIG. 9, the embodiment of the present disclosure provides an information processing method, which is executed by the initiator of the sensing service, and the method includes:
S2110: Sending a sensing service request to the sensing function network entity, wherein the sensing service request indicates the expected executor for providing the sensing service.

The executing entity of the information processing method is the initiator of the sensing service. When sending the sensing service request, the initiator may carry the information of the expected executor in the sensing service request.

The information of the expected executor includes but is not limited to: the identification, type information and/or capability information of the expected executor, and other information which can be configured to determine the expected executor.

If the sensing service request carries the information of the expected executor, when the network side configures the execution of the sensing service, the sensing service will be preferably provided by the expected executor.

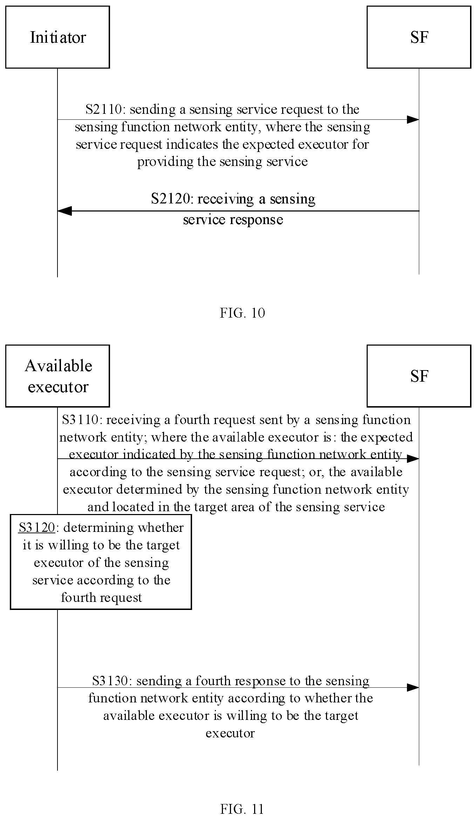

In some embodiments, as shown in FIG. 10, the method also includes:
S2120: receiving a sensing service response.

In some embodiments, the SF may return a sensing service response based on the sensing service request, or may not return a sensing service response.

In the embodiment of the present disclosure, it can be configured to default that the SF will return a sensing service response.

The sensing service response may include: a sensing service acceptance response and/or a sensing service rejection response.

The sensing service acceptance response may indicate that the network side determines that there is a suitable target executor and the network side will provide the sensing service.

The sensing service rejection response may indicate that the network side refuses to provide the service of this sensing service, for example, the response sent by the network side when no suitable target executor is found, or the sensing service response returned by the network side when it determines that the expected current executor specified by the initiator cannot provide the sensing service.

In some embodiments, the sensing service response may be configured to inform the initiator of the sensing service of at least one of the following information:
whether the network will provide the sensing service;
whether the network allows the expected executor to provide the sensing service;
whether there is an expected executor who can provide the sensing service; and
the target executor of the sensing service finally selected by the network.

In other embodiments, the sensing service response indicates whether the expected executor is the target executor for providing the sensing service; or the sensing service response indicates whether the sensing service can be executed.

In some embodiments, the S2110 may include:
when the expected executor is determined, sending the sensing service request containing the information of the expected executor to the sensing function network entity.

For example, the initiator determines the expected executor from a user instruction received from a user interface (UI), or determines the expected executor based on the expected executor provided by the consumer and/or based on the consumer's demand information for the sensing service.

If the initiator determines the expected executor, the sensing service request sent to the SF carries the information of the expected executor.

The information of the expected executor includes but is not limited to: the identification of the expected executor; and/or, the type information of the expected executor, etc.

In some embodiments, the sensing service request also includes at least one of the following information:
area information, indicating the target area for providing the sensing service; and
type identification, indicating the service type of the sensing service.

In one embodiment, the block information may be any information that can indicate the target area, and the area information may include at least one of the following:
tracking area identification, indicating one or more tracking areas (TA) included in the target area;
base station identification, indicating one or more base stations located in the target area;
cell identification, indicating one or more cells included in the target area;
center point location information and sensing radius, the center point location information indicates the location of the center point of the target area, and the location information includes but is not limited to longitude and latitude information; the sensing radius and the center point coordinates may be configured to determine the scope of the target area;
boundary point location information, directly connecting the boundary points corresponding to the boundary point location information to form a closed or approximately closed area, which constitutes the target area

Of course, the above are just a few examples of the sensing service request carrying area information, and the specific implementation is not limited to the above examples.

The type identification indicates the service type of the sensing service.

The service type can be configured at least for SF to determine the sensing mode.

In some embodiments, when the expected executor cannot provide the sensing service or is unwilling to perform the sensing service, the sensing service response indicates that the executor expected by the initiator of the sensing service request expects is unavailable.

That is, if the sensing service request carries the information of the expected executor, the network side device will determine whether the current expected executor is capable or willing to provide the sensing service. If the result of the determination is no, the initiator can be informed through the sensing service response, so that the initiator does not expect the executor to provide the sensing service.

In one embodiment, the method also includes:
when the expected executor is unable to provide the sensing service or is unwilling to perform the sensing service, resending the sensing service request without indicating the expected executor according to the sensing service response.

For example, if it is determined that the use of the sensing service is urgent, the sensing service request without indicating the expected executor can be resent immediately. If it is determined that the use of the sensing service is not urgent and the aforementioned expected executor is still required to provide the sensing service, the sensing service request can be resent to the network after waiting for a preset time, and the expected executor indicated by the sensing service request is the same as or at least partially different from the expected executor indicated by the previous sensing service request sent by the initiator

The urgency of the sensing service can be determined according to the service type and/or application scenario of the sensing service.

In another embodiment, the method further includes:
when the expected executor is unable to provide the sensing service or is unwilling to perform the sensing service, resending the sensing service request according to the sensing service response, and the expected executor indicated by the sensing service request is at least partially different from the expected executor indicated by the previous sensing service request sent by the initiator.

As shown in FIG. 11, the embodiment of the present disclosure provides an information processing method, wherein the method is performed by an available executor capable of providing the sensing service, and the method includes:
S3110: receiving a fourth request sent by a sensing function network entity; where the available executor is: the expected executor indicated by the sensing function network entity according to the sensing service request; or, the available executor determined by the sensing function network entity and located in the target area of the sensing service;
S3120: determining whether it is willing to be the target executor of the sensing service according to the fourth request; and
S3130: sending a fourth response to the sensing function network entity according to whether the available executor is willing to be the target executor.

The available executors of the sensing service include but are not limited to: available base stations and/or available UEs.

The available executors of the sensing service may include but are not limited to: available transmitters and/or available receivers.

In the embodiment of the present disclosure, the available executor will be verified again by the network side to determine whether the available executor is willing or suitable to provide the sensing service when it is needed.

In some embodiments, determining whether it is willing to be the target executor of the sensing service according to the fourth request also includes:
determining the current state information of the executor according to the fourth request; and
determining whether it is willing to be the target executor of the sensing service according to the current state information.

After receiving the fourth request, the available executor will determine its own current state information, and then determine whether it can serve as the target executor according to the current state information. If it is not suitable to be the target executor at present, the available executor will express its unwillingness to be the target executor to the SF, and the indication information of the willingness can be carried in the fourth response and returned to the SF.

In some embodiments, the current state information includes at least one of the following:
remaining power information;
current load status information; and
available state information of the sensing function of the available executor.

For example, if the available executor is a UE, the current status information may at least include: remaining power information and/or available state information of the sensing function.

The remaining power information indicates the remaining power of the UE. For example, if the remaining power is lower than the first power threshold, the sensing service may not be provided; if the remaining power is higher than or equal to the second power threshold, it can be considered that the sensing service can be provided. The second power threshold may be higher than the first power threshold or equal to the first power threshold.

In some embodiments, the sensing function of the available UE and/or the available base station may be abnormal, and the sensing service cannot be provided at this time.

Of course, in some embodiments, if the available executor is an available UE, the current status information may include: current load status information. For example, if the UE itself has a large amount of data being transmitted and is also a transmitter or receiver of the sensing service, the load of the UE will be further increased, resulting in the phenomenon that the sensing service cannot be provided.

If the available executor is an available base station, the current status information may at least include current load status information. If the available base station is originally overloaded, and the available base station continues to express its willingness to provide the sensing service, it may cause the load rate of the available base station to further increase, thereby affecting the service quality of the original communication service of the available base station. Therefore, the available base station expresses its unwillingness to be the target executor to SF through the fourth response during the process of SF determining whether the available executor can be the target executor.

Of course, if the available executor is an available base station, the current status information may also include: available state information of the sensing function, etc. If the available state information indicates that the sensing function of the available base station is normal, at least the base station currently has the ability to provide the sensing service.

In some embodiments, if the sensing service indicates that the sensing signal is a radar signal, the radar chip of the available base station and/or the available UE is required to be normal when providing the sensing service based on the radar signal.

The embodiment of the present disclosure provides an information processing method. Before performing sensing, it is necessary to determine the sensing mode first.
For 5GC to determine the sensing mode, the following criteria need to be considered;
UE or gNB service authorization: for example, UE/gNB is authorized to perform sensing services as a transmitter or receiver;
   UE or gNB capability: for example, whether UE/gNB is capable of working in a specific sensing mode, or whether it is capable of being a transmitter or receiver.
expected candidate transmitter/receiver, referred to as expected transmitter/expected receiver;
UE consent, whether UE is willing to serve as a transmitter or receiver;
service type: for a specific service, the sensing service is provided only by UE, the sensing service is provided only by gNB, or both gNB and base station can perform as a transmitter or a receiver;
service QoS requirements: select one or more transmitters and receivers, for example, if there's high QoS requirement, select multiple transmitters and multiple receivers to provide the sensing service;
UE or gNB availability: UE or gNB that can provide sensing detection in a certain area;
operator pre-configuration information can be configured to determine the sensing mode and/or alternative executors, etc.

Information such as the UE's service authorization, capability information, and user consent are all stored in the UDM, and this part of data is usually used as the UE's subscription data and can be read from the UDM by the SF-C.

The service authorization and capability information of the gNB can be read from the AMF. Whether a gNB is authorized to provide the sensing service can be pre-configured in the AFM.

| Subscription data type | Field | Description |
|---|---|---|
| Sensing subscription data | SUPI | UE identification |
| | Sensing authorization | Whether UE is authorized to perform sensing service as a transmitter or receiver or both |
| | Sensing capability | Whether UE is capable of performing sensing service as a transmitter or receiver or both |
| | User consent | User's wiliness of performing sensing service as a transmitter or receiver or both |

The expected transmitter/receiver, service type and service QoS requirements may be provided in the sensing service request. The sensing service request comes from the UE or the sensing application server.

5GC needs to detect the availability of the UE or base station. SF, such as the control plane SF (SF-C), maps the target area to the cell ID/gNB ID. SF-C determines the service AMF ID according to the cell ID or gNB ID, and sends the cell ID or gNB ID to the AMF. The service AMF sends the SUPI of the available UE in the cell within the target area to the SF-C.

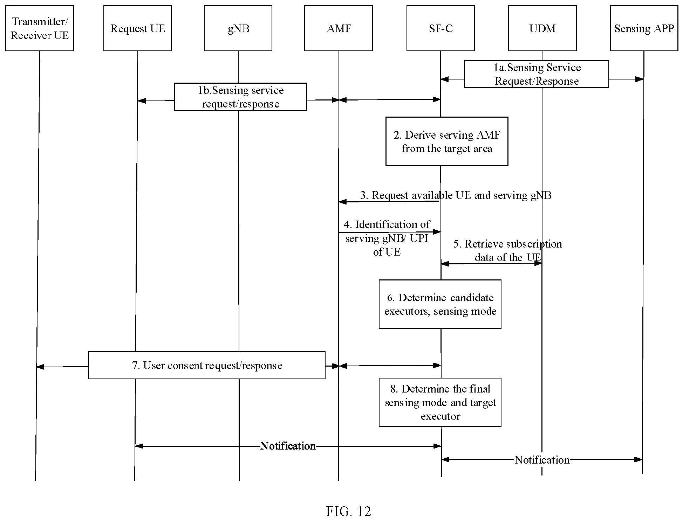

As shown in FIG. 12, the embodiment of the present disclosure provides an information processing method, which may include:
Step 1: SF-C receives a sensing service request, where the sensing service request includes: information of target area, requested QoS, service type and the expected transmitter/receiver;
   If SF-C does not receive the information of the expected transmitter/expected receiver and receives the information of the target area, then execute steps 2-4, otherwise skip steps 2-4.
Step 2: SF-C maps the target area to the cell ID/gNB ID and determines the serving AMF according to the cell ID/gNB ID;
Step 3: SF-C sends a request to the serving AFM, and the request includes: the cell ID and/or gNB ID determined according to the target area.
Step 4: AMF detects the available IDs in the target area identified by the cell ID/gNB ID. AFM also detects whether the base station identified by the gNB ID is authorized and capable of being a transmitter or receiver of the sensing service. AMF sends a list of UEs in the target area identified by the cell ID and/or gNB ID to SF-C, and the list may include the SUPI of the UE. If a transmitter or receiver authorized and capable of performing a sensing service is detected in the target area, base station information is sent to SF-C, and the base station information may include: base station ID and indication information that the base station can serve as a transmitter and/or receiver.
Step 5: SF-C obtains the subscription data of the UE in the UE list at step 4, and the subscription data may include at least: sensing service subscription data; the data content of the sensing service subscription data may include: UE SUPI, sensing authorization information, sensing capability information and user consent.
Step 6: SF-C determines the candidate sensing mode, transmitter, and receiver based on the requested QoS, expected transmitter/receiver, service type, base station information received from the serving AMF, and subscription data obtained from the UDM, etc.
Step 7: SF-C determines whether the candidate transmitter and/or candidate receiver are currently willing to provide the sensing service.
Step 8: SF-C determines the candidate sensing mode, transmitter, and receiver based on the willingness information returned by the candidate transmitter and/or receiver.
Step 9: If a suitable transmitter or receiver is determined from the expected transmitter/expected receiver, SF notifies the sensing application server or the UE that sent the sensing service request. The sensing application server/requesting UE allows 5GC to discover available transmitters and/or receivers to provide sensing services by re-initiating the sensing service request.

The service type and service QoS requirement can be included in the sensing service request. The sensing service request comes from the UE or the sensing application server. 5GC needs to detect the availability of the UE or base station.

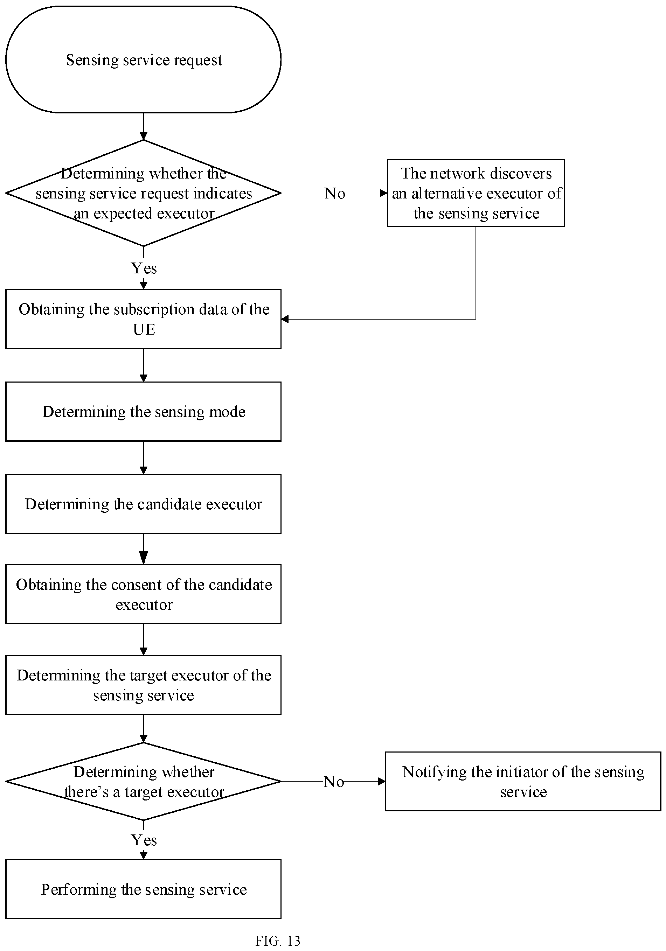

As shown in FIG. 13, the embodiment of the disclosure provides an information processing method, which may include:
receiving, by SF, a sensing service request;
determining whether the sensing service request indicates an expected executor;
if the sensing service request indicates the expected executor, obtaining the subscription data of the UE; of course, this step is for the case where the expected executor includes the UE;
if the sensing service request does not indicate the expected executor, the network discovers an alternative executor of the sensing service, and then proceeds to the step of obtaining the subscription data of the UE;
determining the sensing mode;
determining the candidate executor;
obtaining the consent of the candidate executor, if the consent of the candidate executor is obtained, it means that the candidate executor is an available executor;
determining the target executor from the available executors;
determining whether there is a target executor;
if there is a target executor, execute the sensing service; and
if there is no target executor, notify the initiator of the sensing service.

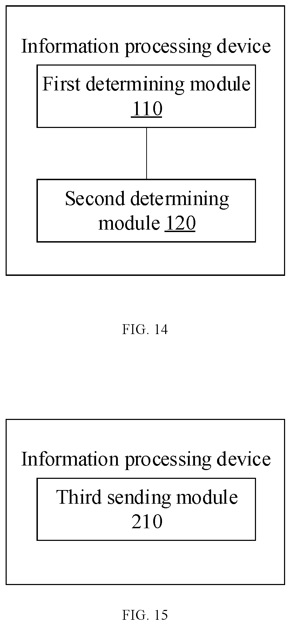

As shown in FIG. 14, an embodiment of the present disclosure provides an information processing device. The device includes:
a first determining module 110 configured to determine a candidate executor of a sensing service, where the candidate executor includes an expected executor of the sensing service and/or an alternative executor discovered by the network; and
a second determining module 120 configured to determine a target executor of the sensing service according to the candidate executor.

The information processing device may be included in a sensing function network entity.

In some embodiments, the first determining module 110 and the second determining module 120 include but are not limited to various program modules. After the program modules are executed by the processor, the above operations can be implemented.

In other embodiments, the first determining module 110 and the second determining module 120 include but are not limited to a software-hardware combination module. The software-hardware combination module includes various programmable arrays. The programmable arrays include but are not limited to field programmable arrays and/or complex programmable arrays.

In some other embodiments, the first determining module 110 and the second determining module 120 include but are not limited to pure hardware modules. The pure hardware modules include but are not limited to various application-specific integrated circuits.

In some embodiments, the first determining module 110 is configured to determine the expected executor. When the expected executor is not determined, the alternative executor is discovered.

In some embodiments, the first determining module 110 is configured to determine the expected executor according to the sensing service request.

In some embodiments, the device further includes:
a first sending module configured to return a sensing service response to the initiator of the sensing service according to the determination result of the target executor.
In some embodiments, the sensing service response indicates whether the expected executor is the target executor for providing the sensing service;
   or,
the sensing service response indicates whether the sensing service can be performed.

In some embodiments, when at least some of the expected executors are unable to provide the sensing service or are unwilling to perform the sensing service, the sensing service response indicates whether the initiator accepts the alternative executor discovered by the network device to provide the sensing service.

In some embodiments, when at least some of the expected executors are unable to provide the sensing service or are unwilling to perform the sensing service, the sensing service response indicates that the executor expected by the initiator of the sensing service request is unavailable.

In some embodiments, the first determining module 110 is further configured to determine the target area for providing the sensing service according to the sensing service request; and configured to determine the base station and/or user equipment UE located in the target area as the alternative executor.

In some embodiments, the sensing service request includes area information, and the area information includes at least one of the following:
cell identification;
base station identification;
Tracking area TA identification.

In some embodiments, the first determining module 110 is configured to determine the base station identification of the base station and/or the cell identification of the cell located in the target area; determine the AMF according to the base station identification of the base station and/or the cell identification of the cell in the target area; send a first request to the AMF; receive a first response returned by the first request; and determine the alternative executor located in the target area according to the first response.

In some embodiments, the first response includes:
base station identification of the available base station;
   and/or
UE identification of the alternative UE.
In some embodiments, the second determining module 120 is configured to determine the sensing mode of the sensing service; and select the target executor from the candidate executors according to the sensing mode.

In some embodiments, the second determining module 120 is configured to determine the sensing mode of the sensing service according to one or more of the service type of the sensing service, the expected service quality QoS of the sensing service, the operator pre-configuration information, and the type of the expected executor.

In some embodiments, the second determining module 120 is configured to determine the available executor from the candidate executors; and determine whether the available executor is willing to serve as the target executor.

In some embodiments, the second determining module 120 is configured to send a second request to the user data management UDM when the candidate executors include user equipment UE; receive a second response returned based on the second request; and determine whether the UE is the available executor based on the second response.

In some embodiments, the second determining module 120 is configured to receive the subscription data of the UE returned based on the second request; and determine whether the UE is the available executor based on the subscription data.

In some embodiments, the subscription data includes at least one of the following:
the UE identification;
sensing authorization information, indicating whether the UE is authorized to be the executor of the sensing service;
user consent information, indicating whether the user of the UE allows to be the executor of the sensing service;
sensing capability information, indicating whether the UE is capable of performing the sensing service as a transmitter, a receiver, or both a transmitter and a receiver.

In some embodiments, the second response includes: a first indication of whether the UDM is the available executor according to the subscription data of the UE.

In some embodiments, the second determining module 120 is configured to send a third request to the access management function AMF of the expected base station when the candidate executors include the expected base station; and determine whether the expected base station is the available executor based on the third response returned by the third request.

In some embodiments, the second determining module 120 is configured to determine the AMF according to the identification of the expected base station or the cell identification of the expected base station when the candidate executors include the expected base station; send the third request to the AMF; and determine whether the expected base station is the available executor according to the configuration information contained in the third response, where the configuration information includes base station authorization information of whether the expected base station is authorized to serve as the executor of the sensing service, and/or capability information of the base station which is the executor of the sensing service.

In some embodiments, the second determining module 120 is configured to determine whether the expected base station is the available executor according to the second indication included in the third response, where the second indication at least includes: the AMF determines whether the expected base station can serve as the target executor according to the configuration information of the expected base station.

In some embodiments, the second determining module 120 is configured to send a fourth request to the available executor; receive a fourth response returned based on the fourth request; and determine whether the available executor is currently willing to serve as the target executor according to the fourth response.

In some embodiments, the device further includes:
a second sending module configured to send a request for providing a sensing service to the target executor when the target executor is determined.

As shown in FIG. 15, an embodiment of the present disclosure provides an information processing device, where the device includes:
a third sending module 210 configured to send a sensing service request to a sensing function network entity, where the sensing service request indicates the expected executor for providing the sensing service.

The information processing device may be included in the initiator of the sensing service.

The information processing device may also include: a storage module, which can be configured at least for the sensing service request.

In some embodiments, the third sending module 210 includes but is not limited to various program modules. After the program modules are executed by the processor, the above operations can be implemented.

In other embodiments, the third sending module 210 includes but is not limited to a software-hardware combination module. The software-hardware combination module includes various programmable arrays. The programmable arrays include but are not limited to field programmable arrays and/or complex programmable arrays.

In some other embodiments, the third sending module 210 includes but is not limited to a pure hardware module. The pure hardware module includes but is not limited to various application-specific integrated circuits.

In some embodiments, the device further includes:
a first receiving module configured to receive a sensing service response.

In some embodiments, the sensing service response indicates whether the expected executor is the target executor for providing the sensing service;
or,
the sensing service response indicates whether the sensing service can be performed.

In some embodiments, the third sending module 210 is configured to send the sensing service request containing the information of the expected executor to the sensing function network entity when the expected executor is determined.

In some embodiments, the sensing service request also includes at least one of the following information:
area information indicating the target area for providing the sensing service; and
type identification indicating the service type of the sensing service.

In some embodiments, when the expected executor is unable to provide the sensing service or is unwilling to perform the sensing service, the sensing service response indicates that the executor expected by the sensing service request initiator is unavailable.

In some embodiments, the device further includes:
a resending module configured to resend the sensing service request that does not indicate the expected executor according to the sensing service response when the expected executor is unable to provide the sensing service or is unwilling to perform the sensing service.

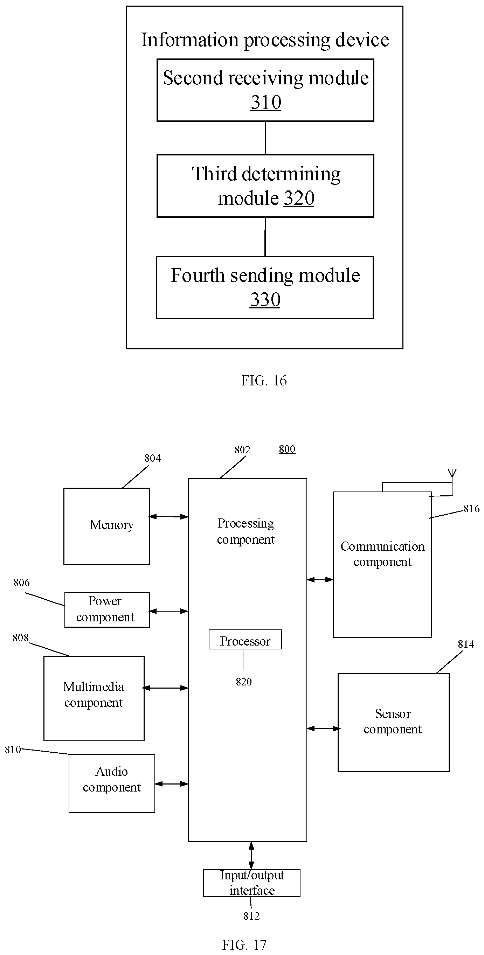

As shown in FIG. 16, the embodiment of the present disclosure provides an information processing device, where the device includes:
a second receiving module 310 configured to receive a fourth request sent by a sensing function network entity; where the available executor is the expected executor indicated by the sensing function network entity according to the sensing service request; or the available executor is the available executor determined by the sensing function network entity and located in the target area of the sensing service;
a third determining module 320 configured to determine whether it is willing to be the target executor of the sensing service according to the fourth request; and
a fourth sending module 330 configured to send a fourth response to the sensing function network entity according to whether the available executor is willing to be the target executor.

The information processing device may be included in the available executors of the sensing service.

In some embodiments, the second receiving module 310, the third determining module 320 and the fourth sending module 330 include but are not limited to various program modules. After the program modules are executed by the processor, the above operations can be realized.

In other embodiments, the second receiving module 310, the third determining module 320 and the fourth sending module 330 include but are not limited to software and hardware combination modules. The software and hardware combination modules include various programmable arrays. The programmable arrays include but are not limited to field programmable arrays and/or complex programmable arrays.

In some other embodiments, the second receiving module 310, the third determining module 320 and the fourth sending module 330 include but are not limited to pure hardware modules. The pure hardware modules include but are not limited to various application-specific integrated circuits.

In some embodiments, the fourth sending module 330 is configured to determine the current state information of the executor according to the fourth request; and determine whether it is willing to be the target executor of the sensing service according to the current state information.

In some embodiments, the current state information includes at least one of the following:
remaining power information;
current load status information; and
available state information of the sensing function of the available executor.

The embodiment of the present disclosure provides a communication device, including:
a memory for storing processor executable instructions;
a processor, respectively connected to the memory;
wherein the processor is configured to execute the information processing method provided by any of the aforementioned technical solutions.

The processor may include various types of storage media, which are non-temporary computer storage media, and can continue to memorize the information stored thereon after the communication device loses power

Here, the communication device includes a UE or a network element, which may be any one of the aforementioned first network element to the fourth network element.

The processor may be connected to the memory through a bus, etc., for reading an executable program stored on the memory, for example, at least one of the methods shown in FIG. 6 to FIG. 13.

FIG. 17 is a block diagram of a UE 800 shown according to an embodiment. For example, UE 800 may be a mobile phone, a computer, a digital broadcast user equipment, a messaging device, a game console, a tablet device, a medical device, a fitness device, a personal digital assistant, etc. The UE may serve as the aforementioned initiator.

Referring to FIG. 17, UE 800 may include one or more of the following components: a processing component 802, a memory 804, a power component 806, a multimedia component 808, an audio component 810, an input/output (I/O) interface 812, a sensing component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above-mentioned method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations on the UE 800. Examples of such data include instructions for any application or method operating on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power to various components of the UE 800. The power component 806 may include a power management system, one or more power supplies, and other components associated with generating, managing and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensing components to sense touches, slides, and gestures on the touch panel. The touch sensing component may not only sense the boundaries of a touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera can receive external multimedia data. Each front camera and the rear camera can be a fixed optical lens system or have focal length and optical zoom capabilities.

The audio component 810 is configured to output and/or input audio signals. For example, the audio component 810 includes a microphone (MIC), and when the UE 800 is in an operating mode, such as a call mode, a recording mode, and a voice recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and the peripheral interface module. The peripheral interface module can be a keyboard, a click wheel, a button, etc. These buttons may include, but are not limited to a home button, a volume button, a start button, and a lock button.

The sensing component 814 includes one or more sensing components for providing various aspects of status assessment for UE 800. For example, the sensor component 814 can detect the open/closed state of the device 800, the relative positioning of components, such as the display and keypad of the UE 800, and the sensing component 814 can also detect the position change of UE 800 or a component of UE 800, the presence or absence of user contact with UE 800, the orientation or acceleration/deceleration of UE 800 and the temperature change of UE 800. The sensing component 814 can include a proximity sensing component configured to detect the presence of nearby objects without any physical contact. The sensing component 814 can also include a light sensing component, such as a CMOS or CCD image sensing component, for use in imaging applications. In some embodiments, the sensing component 814 can also include an acceleration sensing component, a gyroscope sensing component, a magnetic sensing component, a pressure sensor or a temperature sensor.

The communication component 816 is configured to facilitate wired or wireless communication between UE 800 and other devices. UE 800 can access a wireless network based on a communication standard, such as WiFi, 2G or 3G, or a combination thereof. In an embodiment, the communication component 816 receives a broadcast signal or broadcast-related information from an external broadcast management system via a broadcast channel. In an embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, UE 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above method.

In an embodiment, a non-transitory computer-readable storage medium including instructions is also provided, such as a memory 804 including instructions, and the above instructions can be executed by a processor 820 of UE 800 to generate the above method. For example, the non-transitory computer-readable storage medium may be a ROM, a random-access memory (RAM), a CD-ROM, a magnetic tape, a floppy disk, and an optical data storage device, etc.

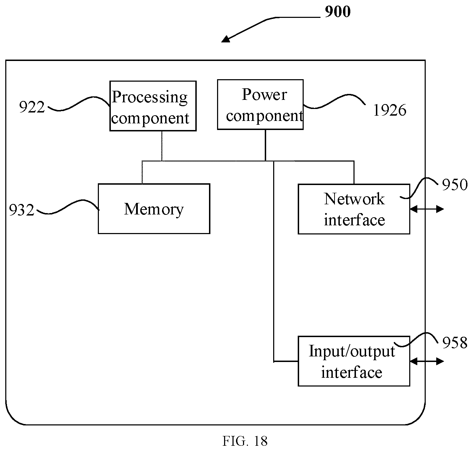

As shown in FIG. 18, an embodiment of the present disclosure shows the structure of a communication device. For example, the communication device 900 may be provided as a network-side device. The communication device may be any of the aforementioned SFs or initiators, etc.

Referring to FIG. 18, the communication device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any of the aforementioned methods applied to the access device, such as the method shown in any one of FIG. 6 to FIG. 13.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LinuxTM, FreeBSDTM or the like.

Other embodiments of the present disclosure will be readily apparent to those skilled in the art after considering the specification and practicing the disclosure disclosed herein. The present disclosure is intended to cover any variation, use or adaptation of the present disclosure that follows the general principles of the present disclosure and includes common knowledge or conventional technical means in the art that are not disclosed in the present disclosure. The description and embodiments are to be regarded as examples only, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. An information processing method, performed by a sensing function network entity, comprising:
determining one or more candidate executors of a sensing service, wherein the candidate executors comprise an expected executor of the sensing service and/or an alternative executor discovered by a network; and
determining a target executor of the sensing service according to the candidate executors.

2. The method according to claim 1, wherein determining the one or more candidate executors comprises:
determining the expected executor; and
when the expected executor is not determined, discovering the alternative executor.

3. The method according to claim 2, wherein determining the expected executor comprises:
determining the expected executor according to a sensing service request.

4. The method according to claim 3, further comprising:
returning a sensing service response to an initiator of the sensing service according to a determination result of the target executor.

5. The method according to claim 4, wherein the sensing service response indicates whether the expected executor is the target executor for providing the sensing service;
or,
the sensing service response indicates whether it is capable of performing the sensing service.

6. The method according to claim 4 or 5, wherein when at least some of the expected executors are unable to provide the sensing service or are unwilling to perform the sensing service, the sensing service response indicates whether the initiator accepts the alternative executor discovered by the network device to provide the sensing service.

7. The method according to any one of claims 4 to 5, wherein when at least some of the expected executors are unable to provide the sensing service or are unwilling to perform the sensing service, the sensing service response indicates that the expected executor of the initiator of the sensing service request is unavailable.

8. The method according to any one of claims 2 to 5, wherein discovering the alternative executor comprises:
determining a target area for providing the sensing service according to the sensing service request; and
determining a base station and/or a user equipment UE located in the target area as the alternative executor.

9. The method according to claim 8, wherein the sensing service request comprises area information, and the area information comprises at least one of the following:
a cell identification;
a base station identification;
a tracking area TA identification.

10. The method according to claim 8 or 9, wherein determining the base station and/or the user equipment UE located in the target area as the alternative executor comprises:
determining a base station identification of the base station and/or a cell identification of the cell located in the target area;
determining AMF according to the base station identification of the base station and/or the cell identification of the cell in the target area;
sending a first request to the AMF;
receiving a first response returned by the first request; and
determining the alternative executor located in the target area according to the first response.

11. The method according to claim 10, wherein the first response comprises:
a base station identification of an available base station;
and/or
a UE identification of an alternative UE.

12. The method according to any one of claims 1 to 11, wherein determining the target executor of the sensing service according to the candidate executors comprises:
determining a sensing mode of the sensing service; and
selecting the target executor from the candidate executors according to the sensing mode.

13. The method according to claim 12, wherein determining the sensing mode of the sensing service comprises:
determining the sensing mode of the sensing service according to one or more of the following: a service type of the sensing service, an expected quality of service QoS of the sensing service, operator pre-configuration information, and a type of the expected executor.

14. The method according to any one of claims 1 to 13, wherein determining the target executor of the sensing service according to the candidate executors comprises:
determining an available executor from the candidate executors; and
determining whether the available executor is willing to serve as the target executor.

15. The method according to claim 14, wherein determining the available executor from the candidate executors comprises:
when the candidate executors comprise a user equipment UE, sending a second request to a user data management UDM;
receiving a second response returned based on the second request; and
determining whether the UE is the available executor according to the second response.

16. The method according to claim 15, wherein receiving the second response returned based on the second request comprises:
receiving subscription data of the UE returned based on the second request;
determining whether the UE is the available executor according to the second response comprises:
determining whether the UE is the available executor according to the subscription data.

17. The method according to claim 16, wherein the subscription data comprises at least one of the following:
an identification of the UE;
sensing authorization information indicating whether the UE is authorized to be the executor of the sensing service;
user consent information indicating whether a user of the UE allows to be the executor of the sensing service; and
sensing capability information indicating whether the UE has a capability to perform the sensing service as a transmitter, a receiver, or both a transmitter and a receiver.

18. The method according to claim 15, wherein the second response comprises a first indication of whether the UDM is the available executor according to subscription data of the UE.

19. The method according to any one of claims 1 to 18, wherein determining the target executor of the sensing service according to the candidate executors comprises:
when the candidate executors comprise an expected base station, sending a third request to an access management function AMF of the expected base station; and
based on a third response returned by the third request, determining whether the expected base station is an available executor.

20. The method according to claim 19, wherein when the candidate executors comprise the expected base station, sending the third request to the access management function AMF of the expected base station comprises:
when the candidate executors comprise the expected base station, determining the AMF according to an identification of the expected base station or a cell identification of the expected base station;
sending the third request to the AMF,
determining whether the expected base station is the available executor based on the third response returned by the third request comprises:
determining whether the expected base station is the available executor according to configuration information contained in the third response, wherein the configuration information comprises base station authorization information of whether the expected base station is authorized as the executor of the sensing service, and/or capability information of the base station which is the executor of the sensing service.

21. The method according to claim 20, wherein determining whether the expected base station is the available executor according to the configuration information contained in the third response comprises:
determining whether the expected base station is the available executor according to a second indication contained in the third response, wherein the second indication at least comprises the AMF determining whether the expected base station is capable of serving as the target executor according to the configuration information of the expected base station.

22. The method according to any one of claims 14 to 21, wherein determining whether the available executor is willing to serve as the target executor comprises:
sending a fourth request to the available executor;
receiving a fourth response returned based on the fourth request; and
determining whether the available executor is currently willing to serve as the target executor according to the fourth response.

23. The method according to any one of claims 1 to 22, further comprising:
when the target executor is determined, sending a request to provide the sensing service to the target executor.

24. An information processing method, performed by an initiator of a sensing service, comprising:
sending a sensing service request to a sensing function network entity, wherein the sensing service request indicates an expected executor for providing the sensing service.

25. The method according to claim 24, further comprising:
receiving a sensing service response.

26. The method according to claim 25, wherein the sensing service response indicates whether the expected executor is a target executor for providing the sensing service;
or,
the sensing service response indicates whether it is capable of performing the sensing service.

27. The method according to any one of claims 24 to 26, wherein sending the sensing service request to the sensing function network entity comprises:
when the expected executor is determined, sending the sensing service request containing information of the expected executor to the sensing function network entity.

28. The method according to any one of claims 24 to 27, wherein the sensing service request further comprises at least one of the following information:
area information indicating a target area for providing the sensing service; and
type identification indicating a service type of the sensing service.

29. The method according to any one of claims 24 to 28, wherein when the expected executor is unable to provide the sensing service or is unwilling to perform the sensing service, the sensing service response indicates that the expected executor of the initiator of the sensing service request is unavailable.

30. The method according to claim 29, further comprising:
when the expected executor is unable to provide the sensing service or is unwilling to perform the sensing service, resending the sensing service request without indicating the expected executor according to the sensing service response.

31. An information processing method, performed by an available executor that is capable of providing a sensing service, comprising:
receiving a fourth request sent by a sensing function network entity; wherein the available executor is: an expected executor indicated by the sensing function network entity according to a sensing service request; or an available executor determined by the sensing function network entity and located in a target area of the sensing service;
determining whether it is willing to be a target executor of the sensing service according to the fourth request; and
sending a fourth response to the sensing function network entity according to whether the available executor is willing to be the target executor.

32. The method according to claim 31, wherein determining whether it is willing to be the target executor of the sensing service according to the fourth request further comprises:
determining current state information of the executor according to the fourth request; and
determining whether it is willing to be the target executor of the sensing service according to the current state information.

33. The method according to claim 32, wherein the current state information comprises at least one of the following:
remaining power information;
current load status information; and
available state information of a sensing function of the available executor.

34. An information processing device, comprising:
a first determining module, configured to determine one or more candidate executors of a sensing service, wherein the candidate executors comprise an expected executor of the sensing service and/or an alternative executor discovered by a network; and
a second determining module, configured to determine a target executor of the sensing service according to the candidate executors.

35. The device according to claim 34, wherein the first determining module is configured to determine the expected executor; and when the expected executor is not determined, discover the alternative executor.

36. The device according to claim 35, wherein the first determining module is configured to determine the expected executor according to a sensing service request.

37. The device according to claim 36, further comprising:
a first sending module configured to return a sensing service response to an initiator of the sensing service according to a determination result of the target executor.

38. The device according to claim 37, wherein,
the sensing service response indicates whether the expected executor is the target executor for providing the sensing service;
or,
the sensing service response indicates whether it is capable of performing the sensing service.

39. The device according to claim 37 or 38, wherein when at least some of the expected executors are unable to provide the sensing service or are unwilling to perform the sensing service, the sensing service response indicates whether the initiator accepts the alternative executor discovered by the network device to provide the sensing service.

40. The device according to claim 38 or 39, wherein when at least some of the expected executors are unable to provide the sensing service or are unwilling to perform the sensing service, the sensing service response indicates that the expected executor of the initiator of the sensing service request is unavailable.

41. The device according to any one of claims 35 to 40, wherein the first determining module is further configured to determine a target area for providing the sensing service according to the sensing service request; and determine a base station and/or a user equipment UE located in the target area as the alternative executor.

42. The device according to claim 41, wherein the sensing service request includes area information, and the area information comprises at least one of the following:
a cell identification;
a base station identification; and
a tracking area TA identification.

43. The device according to claim 41 or 42, wherein the first determining module is configured to determine a base station identification of the base station and/or a cell identification of the cell located in the target area; determine the AMF according to the base station identification of the base station and/or the cell identification of the cell in the target area; send a first request to the AMF; receive a first response returned by the first request; and determine the alternative executor located in the target area according to the first response.

44. The device according to claim 43, wherein the first response comprises:
a base station identification of an available base station;
and/or
a UE identification of an alternative UE.

45. The device according to any one of claims 34 to 44, wherein the second determining module is configured to determine a sensing mode of the sensing service; and select the target executor from the candidate executors according to the sensing mode.

46. The device according to claim 45, wherein the second determining module is configured to determine the sensing mode of the sensing service according to one or more of the following: a service type of the sensing service, an expected quality of service QoS of the sensing service, operator pre-configuration information, and a type of the expected executor.

47. The device according to any one of claims 34 to 46, wherein the second determining module is configured to determine an available executor from the candidate executors; and determine whether the available executor is willing to serve as the target executor.

48. The device according to claim 47, wherein the second determining module is configured to send a second request to a user data management UDM when the candidate executors comprise a user equipment UE; receive a second response returned based on the second request; and determine whether the UE is the available executor according to the second response.

49. The device according to claim 48, wherein the second determining module is configured to receive subscription data of the UE returned based on the second request; and determine whether the UE is the available executor according to the subscription data.

50. The device according to claim 49, wherein the subscription data comprises at least one of the following:
an identification of the UE;
sensing authorization information indicating whether the UE is authorized to be the executor of the sensing service;
user consent information indicating whether a user of the UE allows to be the executor of the sensing service; and
sensing capability information indicating whether the UE has a capability to perform the sensing service as a transmitter, a receiver, or both a transmitter and a receiver.

51. The device according to claim 48, wherein the second response comprises a first indication of whether the UDM is the available executor according to subscription data of the UE.

52. The device according to any one of claims 34 to 51, wherein the second determining module is configured to send a third request to an access management function AMF of an expected base station when the candidate executors comprise the expected base station; and determine whether the expected base station is an available executor based on a third response returned by the third request.

53. The device according to claim 52, wherein the second determining module is configured to determine the AMF according to an identification of the expected base station or a cell identification of the expected base station when the candidate executors comprise the expected base station; send the third request to the AMF; determine whether the expected base station is the available executor according to configuration information contained in the third response, wherein the configuration information comprises base station authorization information of whether the expected base station is authorized as the executor of the sensing service, and/or capability information of the base station which is the executor of the sensing service.

54. The device according to claim 53, wherein the second determining module is configured to determine whether the expected base station is the available executor according to a second indication contained in the third response, wherein the second indication at least comprises the AMF determining whether the expected base station is capable of serving as the target executor according to the configuration information of the expected base station.

55. The device according to any one of claims 47 to 54, wherein the second determining module is configured to send a fourth request to the available executor; receive a fourth response returned based on the fourth request; and determine whether the available executor is currently willing to serve as the target executor according to the fourth response.

56. The device according to any one of claims 34 to 55, further comprising:
a second sending module configured to send a request to provide the sensing service to the target executor when the target executor is determined.

57. An information processing device, comprising:
a third sending module configured to send a sensing service request to a sensing function network entity, wherein the sensing service request indicates an expected executor for providing a sensing service.

58. The device according to claim 57, further comprising:
a first receiving module configured to receive a sensing service response.

59. The device according to claim 58, wherein the sensing service response indicates whether the expected executor is a target executor for providing the sensing service;
or,
the sensing service response indicates whether it is capable of performing the sensing service.

60. The device according to any one of claims 57 to 59, wherein the third sending module is configured to send the sensing service request containing information of the expected executor to the sensing function network entity when the expected executor is determined.

61. The device according to any one of claims 57 to 60, wherein the sensing service request further comprises at least one of the following information:
area information indicating a target area provided by the sensing service; and
type identification indicating a service type of the sensing service.

62. The device according to any one of claims 57 to 61, wherein when the expected executor is unable to provide the sensing service or is unwilling to perform the sensing service, the sensing service response indicates that the expected executor of the initiator of the sensing service request is unavailable.

63. The device according to claim 62, further comprising:
a resending module configured to resend the sensing service request without indicating the expected executor according to the sensing service response when the expected executor is unable to provide the sensing service or is unwilling to perform the sensing service.

64. An information processing device, comprising:
a second receiving module configured to receive a fourth request sent by a sensing function network entity; wherein an available executor is: an expected executor indicated by the sensing function network entity according to the sensing service request; or an available executor determined by the sensing function network entity and located in a target area of a sensing service;
a third determining module configured to determine whether it is willing to be a target executor of the sensing service according to the fourth request; and
a fourth sending module configured to send a fourth response to the sensing function network entity according to whether the available executor is willing to be the target executor.

65. The method according to claim 64, wherein the fourth sending module is configured to determine current state information of the executor according to the fourth request; and determine whether it is willing to be the target executor of the sensing service according to the current state information.

66. The device according to claim 65, wherein the current state information comprises at least one of the following:
remaining power information;
current load status information; and
available state information of a sensing function of the available executor.

67. A communication device, comprising a processor, a transceiver, a memory, and an executable program stored on the memory and capable of being run by the processor, wherein the processor executes the method according to any one of claims 1 to 23, 24 to 30, and 31 to 33 upon running the executable program.

68. A computer storage medium, wherein the computer storage medium stores an executable program; after the executable program is executed by the processor, the method according to any one of claims 1 to 23, 24 to 30, and 31 to 33 can be implemented.
